(19) Europäisches Patentamt
European Patent Office
Office européen des brevets

(11) Veröffentlichungsnummer: **0 222 246**
**A1**

(12) # EUROPÄISCHE PATENTANMELDUNG

(21) Anmeldenummer: **86114920.1**

(22) Anmeldetag: **27.10.86**

(51) Int. Cl.⁴: **C08F 283/08**,
//(C08F283/08,222:40)

(30) Priorität: **13.11.85 DE 3540119**

(43) Veröffentlichungstag der Anmeldung:
**20.05.87 Patentblatt 87/21**

(84) Benannte Vertragsstaaten:
**BE DE FR GB NL**

(71) Anmelder: **BASF Aktiengesellschaft**
**Carl-Bosch-Strasse 38**
**D-6700 Ludwigshafen(DE)**

(72) Erfinder: **Taubitz, Christof, Dr.**
**In der Dreispitz 15**
**D-6706 Wachenheim(DE)**
Erfinder: **Seiler, Erhard, Dr.**
**Erpolzheimer Strasse 1**
**D-6700 Ludwigshafen(DE)**
Erfinder: **Schlemmer, Lothar**
**Duisbergstrasse 1a**
**D-6701 Maxdorf(DE)**

(54) **Modifizierte Polyphenylentherharze mit Imidgruppen.**

(57) Die Erfindung betrifft ein Verfahren zur Herstellung modifizierter Polyphenylenether durch Aufpfropfen eines Maleinimids der allgemeinen Formel (I)

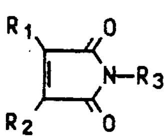

I,

worin $R_1$, $R_2$ und $R_3$ = H, Alkyl-, Cycloalkyl-, Alkenyl-, gegebenfalls substituierte Aryl-und verzweigte Alkylgruppen darstellen, insbesondere von N-Phenylmaleinimid, auf Polyphenylenether, die gegebenenfalls Polymerisate aus vinylaromatischen Verbindungen enthalten, sowie modifizierte Polyphenylenetherharzen aus 99 bis 90 Gew.-Teilen Polyphenylenether, 0 bis 1000 Gew.Teilen vinylaromatischen Polymeren und 0,1 bis 10 Gew.-Teilen pfropfpolymerisiertem Maleinimid der Formel (I).

EP 0 222 246 A1

# Modifizierte Polyphenylenetherharze mit Imidgruppen

Die Erfindung betrifft ein Verfahren zur Herstellung von modifizierten Polyphenylenetherharzen durch Aufpfropfen einer olefinisch ungesättigten Verbindung auf Polyphenylenether, die gegebenenfalls mit Polymerisaten aus vinylaromatischen Verbindungen gemischt sind sowie die modifizierten Polyphenylenetherharze.

Bei derartigen Polymeren handelt es sich um hochmolekulare Stoffe, bei denen auf bereits vorgebildeten Molekülketten, die durch Polykondensation gewonnen wurden, nachträglich Seitenketten aus olefinisch ungesättigten Verbindungen aufgepfropft werden.

Es ist bekannt, Maleinsäureanhydrid oder Maleinsäureimide auf Polymerisate wie Polyethylen, Polypropylen, Polystyrol, Butadienpolymerisate, Ethylen-Propylen-Copolymerisate etc. zu pfropfpolymerisieren (vgl. B.C. Trivedi und B.M. Culbertson in der Publikation "Maleinic Anhydride", Chapter 11, Seiten 459 bis 478, Plenum Press, New York [1982]). Es ist auch bereits die Herstellung von Polyphenylenether-Maleinsäureanhydrid-Pfropfpolymerisaten beschrieben (vgl. US-Patente 4 287 321, 4 338 410 und 4 097 556 sowie EP-A-17 939). Es ist weiterhin bekannt, Polyphenylenetherharze mit einem Styrol-N-Phenylmaleinimid-Copolymerisat zu mischen, um zu thermoplastischen Harzen mit hoher Wärmebeständigkeit zu kommen (vgl. EP-A-44 703). Ferner sind in der Literatur bereits Mischungen aus gegebenenfalls mit Styrol gepfropften Polyphenylenether mit Reaktionsprodukten aus multifunktionellem Cyanat und einem multifunktionellen Maleinimid bekannt (vgl. Derwent Chem. Abstracts 33613 K/14 [JP 58 034 845] und Derwent Chem. Abstracts 52623 K/22 [JP 58 067 751]). Bei diesen bekannten Harzen ist der Polyphenylenether in einem Polykondensat eingebettet. Das erhaltene Produkt weist keine thermoplastischen Eigenschaften auf.

Aufgabe der vorliegenden Erfindung war es, ein mit aufgepfropftem Maleinimid modifiziertes thermoplastisches Polyphenylenetherharz aufzufinden, das leicht herstellbar ist und zu Formkörpern jeglicher Art verarbeitbar ist.

Diese Aufgabe wurde durch Verfahren gemäß Patentansprüchen 1 bis 3 und durch modifizierte Polyphenylenetherharze gemäß Patentanspruch 4 gelöst.

Die in den modifizierten Polyphenylenetherharzen enthaltenen Polyphenylether werden nach bekannten Verfahren aus in ortho-Position durch Alkylgruppen disubstituierten Phenolen durch oxidative Kupplung hergestellt (vgl. US-Patente 3 661 848, 3 219 625, 3 378 505, 3 306 874, 3 306 875 und 3 639 656). Die gegebenenfalls alkylsubstituierten Polyphenylenether sind bevorzugt mit vinylaromatischen Polymerisaten verträglich.

Polymere gelten als miteinander verträglich, wenn sie weitgehend oder ganz ineinander löslich sind (vgl. A. Noshay, "Block Copolymers", Academic Press [1977], Seiten 8 bis 10; sowie O. Olabisi, "Polymer-Polymer Miscibility", Academic Press - [1979], Seiten 117 bis 189).

Verträgliche Polyphenylenether sind beispielsweise Poly(2,6-diethyl-1,4-phenylen)-ether, Poly(2-methyl-6-ethyl-1,4-phenylen)-ether, Poly(2-methyl-6-propyl-1,4-phenylen)-ether, Poly(2,6-dipropyl-1,4-phenylen)-ether, Poly(2-ethyl-6-propyl-1,4-phenylen)-ether oder Copolymere, wie solche, die 2,3,6-Trimethylphenol enthalten, außerdem Polymermischungen. Besonders bevorzugt ist jedoch Poly-(2,6-dimethyl-1,4-phenylen)-ether.

Die Polyphenylenether sind im allgemeinen hochmolekular. Das Molekulargewicht aus dem Gewichtsmittel ($M_w$) beträgt 10.000 bis 80.000, im besonderen 15.000 bis 60.000.

Die Polyphenylenether sind in den modifizierten Polyphenylenetherharzen in Mengen von 99,9 bis 90 Gewichtsteilen, bevorzugt in Mengen von 99 bis 95 Gewichtsteilen enthalten.

Bei dem Pfropfmonomeren mit olefinisch ungesättigter Doppelbindung handelt es sich um Maleinimide der allgemeinen Formel (I)

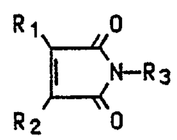

I,

wobei $R_1$, $R_2$ und $R_3$ = H, Alkyl-, Alkenyl-, Cycloalkyl-, gegebenenfalls substituierte Aryl-und verzweigte Alkyl-Gruppen bedeuten, wie Maleinimid, N-Methylmaleinimid, N-Butylmaleinimid, N-Cyclohexylmaleinimid, N-Phenylmaleinimid, N-(p-Methylphenyl)maleinimid, N-(3,5-dimethylphenyl)-maleinimid, N-(p-Methoxyphenyl)maleinimid, N-Benzylmaleinimid, N-(1-naphthyl)maleinimid. Bevorzugt ist N-Phenylmaleinimid.

Die Komponente (I) wird bevorzugt in Mengen von 0,1 bis 10, vorzugsweise 0,1 bis 1,0 Gewichtsteilen pfropfpolymerisiert.

Neben dem Maleinimid (I) oder Gemischen können gegebenenfalls weitere, auf den Polyphenylenether pfropfpolymerisierbare Monomere mit olefinischen Doppelbindungen eingesetzt werden.

Die Maleinimidkomponente wird gegebenenfalls in Gegenwart eines Radikalstarters, der bevorzugt ein übliches organisches Peroxid oder eine übliche Azoverbindung ist, pfropfpolymerisiert. Solche sind dem Fachmann bekannt.

Besonders bevorzugt sind organische Peroxide mit einer Halbwertszeit des Zerfalls [vgl. Modern Plastics 36, (1959), (6), Seiten 142 bis 148] bei 200°C von 1 bis 30 Sekunden. Beispielhaft seien genannt: 1,1-Di-tert-butyl-peroxy-3,3,5-trimethylcyclohexan, Tert-butyl-peroxy-isopropyl-carbonate, Tert-butyl-peroxy-3,3,5-trimethylhexoate, Tert-butylperacetat, Tert-butyl-perbenzoat, 4,4-Di-tert-butylperoxy-valeriansäure-n-butylester, 2,2-Di-tert-butylperoxy-butan, Di-cumyl-peroxid, Tert-butyl-cumylperoxid, 1,3-Bis(tert-butyl-peroxyisopropyl)benzol, Di-tert-butylperoxid. Die Wahl des Radikalstartes richtet sich nach der gewünschten Reaktionstemperatur.

Der Starter kann bei einer Reaktionstemperatur von über 250°C bei ausreichender Reaktionsdauer beispielsweise in der Schmelze fehlen, gegebenenfalls ist er in Mengen unter 10 Gew.-%, bevorzugt unter 5 Gew.-% anwesend, bevorzugt, wenn man die Lösung umsetzt. Besonders bevorzugt ist die Umsetzung in der Schmelze oberhalb von 200°C, wobei der Starter fehlt.

Die Mischungen enthalten gegebenenfalls noch mit dem Polyphenylenether verträgliche vinylaromatische Polymerisate.

Mit Polyphenylenether verträgliche vinylaromatische Polymerisate sind beispielsweise von O. Olabisi in "Polymer-Polymer Miscibility", Academic Press (1979), Seiten 224 bis 230 und 245 beschrieben. Besonders geeignet sind vinylaromatische Polymerisate, die bestehen aus: Styrol, Chlorstyrol, α-Methylstyrol, p-Methylstyrol, im untergeordneten Maße aus (Methyl)-acrylnitrilen (vorzugsweise unter 8 Gew.-%). Bevorzugt wird Polystyrol eingesetzt.

Das Molekulargewicht der vinylaromatischen Polymeren aus dem Gewichtsmittel ($M_w$) beträgt 1500 bis 2 000 000, besonders bevorzugt 70 000 bis 1 000 000.

Die Styrolpolymerisate können durch die üblichen Polymerisationsverfahren, wie Masse-, Suspensions-, Emulsions-oder Lösungspolymerisation hergestellt werden.

Die Styrolpolymerisate können auch schlagzäh modifiziert sein. Solche Polymerisate sind dem Fachmann als schlagzähes Polystyrol (HIPS) bekannt. Dabei werden die vinylaromatischen Polymerisate in Gegenwart eines Schlagzähmodifiers hergestellt oder die vinylaromatischen Polymerisate mit gepfropften Synthesekautschuken abgemischt.

Als Synthesekautschuke seien genannt: Polybutadien, Styrol-Butadien-, Acrylnitril-Butadien-, Ethylen-Propylen-, Polyacrylat-und Polyisopren-Kautschuke.

Die vinylaromatischen Polymerisate sind bevorzugt in den erfindungsgemäßen Polyphenylenetherharzen vorhanden, wenn man sie in der Schmelze herstellt. Bei deren Abwesenheit erhält man stärker bis vollständig vernetzte Produkte. Die vinylaromatischen Polymerisate sind in Mengen von 0 bis 1000 Gew.-Teilen, besonders bevorzugt in Mengen von 5 bis 80 Gew.-Teilen im Polyphenylenetherharz enthalten.

Die Komponenten werden in Lösung oder in der Schmelze umgesetzt.

Die Komponenten werden bevorzugt in der Schmelze der Polymeren bei Temperaturen von 170 bis 350°C, vorzugsweise zwischen 240 und 300°C innig vermischt. Vorzugsweise verwendet man dafür einen Zweischneckenextruder. Die Verweilzeit beträgt im allgemeinen 0,5 bis 10 Minuten, bevorzugt 1 bis 5 Minuten.

Die Komponenten werden vorzugsweise gemeinsam dosiert und in einem Aufschmelzteil aufgeschmolzen. Die Extruderschnecke im Aufschmelzteil enthält bevorzugt Knetelemente. An die Aufschmelzzone schließt sich die Reaktionszone an, die bevorzugt Knetelemente und zusätzlich Knetelemente mit rückwärts förderndem Gewinde enthält. Vor dem Produktaustrag befindet sich bevorzugt eine Entgasungszone zur Entfernung der flüchtigen Bestandteile. Die ausgetragene Schmelze wird im allgemeinen granuliert.

Die Granulate sind vielfältig verwendbar.

Die erfindungsgemäßen modifizierten Harze können in der üblichen Weise modifiziert werden. Sie können daher z.B. Verstärkungs-und Füllstoffe, insbesondere Glasfasern, Flammschutzmittel, Stabilisatoren, Gleit-und Flammschutzmittel sowie Farbstoffe und Pigmente enthalten. Als Verstärkungsmittel können z.B. Glasfasern, Glaskugeln, Kaolin, Quarz, Glimmer, Wollastonit, Talkum, Asbest, Titandioxid, Aluminiumoxid, Micovit, Kreide oder calciniertes Aluminiumsilikat eingesetzt werden.

Die erfindungsgemäßen Harze können als Haftmittler eingesetzt werden. Sie eignen sich auch als Werkstoffe, Folien, dünne Haftschichten, Schmelzkleber und Beschichtungen.

## Beispiel 1

97,1 Gew.-Teile Poly-(2,6-dimethyl-1,4-phenylen)-ether (= PPE) mit einer relativen Viskosität von 0,60, gemessen in 1gew.%iger $CHCl_3$-Lösung bei 25°C und 2,9 Gew.-Teile N-Phenylmaleinimid werden in einem Zweischneckenextruder (ZSK 53)

der Firma Werner u. Pfleiderer dosiert und in einem ersten Teil unter Verwendung von Knetelementen bei 280°C aufgeschmolzen, anschließend in einem zweiten Teil unter Kneten und Verwendung von zurückfördernden Knetelementen bei 280°C umgesetzt und anschließend in einer Entgasungszone bei 280°C durch Anlegen von Vakuum entgast. Die mittlere Verweilzeit im Extruder beträgt 3 Minuten. Die austretende Schmelze wird durch ein Wasserbad geleitet, granuliert und getrocknet. Das Granulat ist zu 78 Gew.-% in Toluol unlöslich. Man preßt einen Film und bestimmt IR-spektroskopisch den Maleinimidgehalt mit 1,0 Gew.-% im Polyphenylenetherharz.

Beispiel 2

87,1 Gew.-Teile PPE gemäß Beispiel 1, 10 Gew.-Teile Polystyrol (PS 144 C, Fa. BASF, MFI 200 (5,0 = 24 g/10 Min.) und 2,9 Gew.-Teile N-Phenylmaleinimid werden gemäß Beispiel 1 umgesetzt. Das Granulat ist zu 6 Gew.-% in Toluol unlöslich, der Maleinimidgehalt beträgt 1,4 Gew.-%.

Beispiel 3

86,1 Gew.-Teile PPE gemäß Beispiel 1, 10 Gew.-Teile Polystyrol, 2,9 Gew.-Teile N-Phenylmaleinimid und ein Gew.-Teil Dicumylperoxid werden gemäß Beispiel 2 umgesetzt. Das Granulat ist zu 8 Gew.-% in Toluol unlöslich, der Maleinimidgehalt beträgt 1,9 Gew.-%.

Beispiel 4

67,5 Gew.-Teile PPE gemäß Beispiel 1, 30 Gew.-Teile Polystyrol (PS 143 E, Fa. BASF, MFI 200/5,0 = 9 g/10 Min.), 1,65 Gew.-Teile N-Phenylmaleinimid und 0,4 Gew.-Teile Dicumylperoxid, aufgebracht auf 0,6 Gew.-Teilen Tonerde, werden gemäß Beispiel 1 bei 270°C aufgeschmolzen, bei 265°C umgesetzt und bei 270°C entgast. Das Granulat ist zu 4 Gew.-% in Toluol unlöslich, der Maleinimidgehalt beträgt 1,0 Gew.-%.

Beispiel 5

86,5 Gew.-Teile PPE gemäß Beispiel 1, 10 Gew.-Teile Polystyrol gemäß Beispiel 2 und 0,6 Gew.-Teile Dicumylperoxid, aufgebracht auf 0,9 Gew.-Teile Tonerde, werden in einem Extruder gemäß Beispiel 1 dosiert. Am zweiten Gehäuse des Extruders wird eine auf 100°C erwärmte Mischung aus 2,5 Gew.-Teilen N-Phenylmaleinimid und ein Gew.-Teil Styrol zugepumpt. Die Aufschmelztemperatur beträgt 270°C, die Reaktionstemperatur 260°C, die Entgasungstemperatur 270°C. Das Granulat ist zu 5 Gew.-% in Toluol unlöslich, der Maleinimidgehalt beträgt 1,7 Gew.-%.

**Ansprüche**

1. Verfahren zur Herstellung von modifizierten Polyphenyletherharzen durch Aufpfropfen einer olefinisch ungesättigten Verbindung auf Polyphenylenether, die gegebenenfalls mit Polymerisaten aus vinylaromatischen Verbindungen gemischt sind, dadurch gekennzeichnet, daß als olefinisch ungesättigte Verbindung ein Maleinimid der allgemeinen Formel (I)

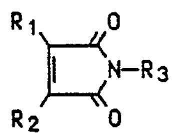
I,

worin $R_1$, $R_2$ und $R_3$ = H, Alkyl-, Cycloalkyl-, Alkenyl-, gegebenenfalls substituierte Aryl-und verzweigte Alkylgruppen darstellen, pfropfpolymerisiert wird.

2. Verfahren nach Anspruch 1, dadurch gekennzeichnet, daß das Maleinimid N-Phenylmaleinimid ist.

3. Verfahren nach Anspruch 1, dadurch gekennzeichnet, daß man in der Schmelze oberhalb von 200°C ohne Verwendung eines Radikalstarters pfropfpolymerisiert.

4. Modifizierte Polyphenylenetherharze nach Anspruch 1 aus 99,9 bis 90 Gew.-Teilen Polyphenylenether, 0 bis 1000 Gew.-Teilen vinylaromatischen Polymeren und 0,1 bis 10 Gew.-Teilen pfropfpolymerisiertem Maleinimid der Formel (I).

Europäisches Patentamt

# EUROPÄISCHER RECHERCHENBERICHT

Nummer der Anmeldung

EP 86 11 4920

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| X | EP-A-0 121 974 (GENERAL ELECTRIC CO.)<br>* Ansprüche 1,3 * | 1-4 | C 08 F 283/08 //<br>(C 08 F 283/08<br>C 08 F 222:40 ) |
| X | PATENTS ABSTRACTS OF JAPAN, Band 5, Nr. 79 (C-56)[751], 23. Mai 1981; & JP-A-56 26 913 (SUMITOMO KAGAKU KOGYO K.K.) 16-03-1981<br>* Insgesamt * | 1-4 | |
| A | DE-A-3 208 007 (MITSUBISHI GAS CHEMICAL CO.) | | |

RECHERCHIERTE SACHGEBIETE (Int. Cl.4)

C 08 F

Der vorliegende Recherchenbericht wurde für alle Patentansprüche erstellt.

| Recherchenort | Abschlußdatum der Recherche | Prüfer |
|---|---|---|
| DEN HAAG | 23-02-1987 | MEULEMANS R.A.M.G.G. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument